# EUROPEAN PATENT SPECIFICATION

(11) **EP 1 399 770 B1**
(45) Date of publication and mention of the grant of the patent: **15.11.2006**
(21) Application number: 02735574.2
(22) Date of filing: 17.05.2002
(51) Int. Cl.: G02B 6/44

(54) **OPTICAL FIBRE TERMINATION UNIT**
FASEROPTISCHE ABSCHLUSSEINHEIT
UNITE TERMINALE DE FIBRE OPTIQUE

(30) Priority: 31.05.2001 GB 0113114
(43) Date of publication of application: 24.03.2004
(73) Proprietor: Tyco Electronics Raychem NV, 3010 Kessel-Lo (BE)
(72) Inventor: BLEUS, Heidi, B-3600 Genk (BE); BOS, Peter, B-3270 Schoonderbuken (BE); SCHURMANS, Erik, B-3450 Hogen-Geetbets (BE)
(74) Representative: Jay, Anthony William
(86) International application number: PCT/GB2002/002331
(87) International publication number: WO 2002/097505

(56) References cited:
- US-A- 5 146 532
- PATENT ABSTRACTS OF JAPAN vol. 1997, no. 11, 28 November 1997 (1997-11-28) & JP 09 189378 A (FURUKAWA ELECTRIC CO LTD:THE;TOKYO ELECTRIC POWER CO INC:THE), 22 July 1997 (1997-07-22)
- PATENT ABSTRACTS OF JAPAN vol. 018, no. 617 (E-1634), 24 November 1994 (1994-11-24) & JP 06 233426 A (MIRAI IND CO LTD), 19 August 1994 (1994-08-19)
- PATENT ABSTRACTS OF JAPAN vol. 1998, no. 11, 30 September 1998 (1998-09-30) & JP 10 170731 A (FUJITSU DENSO LTD), 26 June 1998 (1998-06-26)
- PATENT ABSTRACTS OF JAPAN vol. 2000, no. 06, 22 September 2000 (2000-09-22) & JP 2000 089041 A (NIKKO IND CORP), 31 March 2000 (2000-03-31)

## Description

The present invention relates to an optical fibre positioning unit. More in particular, the present invention relates to a positioning unit for optical fibre cables, the unit comprising a base member and at least two cable-holding member.

Termination or break-out devices for positioning optical fibre cables are well known. International Patent Application WO 95/07481, for example, discloses a break-out device in which fibres can be passed from a larger guiding tube to a number of smaller guiding tubes without significant light loss. International Patent Application WO 00/72073 discloses a break-out device which allows tubes and/or fibre cables of various diameters to be used.

Detents for terminating optical fibres are disclosed in International Patent Application WO 00/75704. These known detents are designed in particular for holding optical fibre cables having a flexible strength member, for example a strength member made of KEVLAR^{®}.

The detent firmly clamps the strength member so any pulling of the fibre cable will not result in the relatively fragile optical fibre being pulled.

JP-A-09189378 and JP-A- 06233426 describe stacked cable-holding members which are attached to one another.

With the increasing number of optical fibres used in telecommunication networks there is an increasing need for miniaturisation. As modem optical fibre cables contain large numbers of relatively thin constituent cables or cable units (for instance so-called "pigtails"), large numbers of those cables have to be terminated in a relatively small space. There is, therefore, a need for smaller components. In addition, a large degree of flexibility is desired as the number of cables terminated in a certain component (e.g. fibre management rack) may be varied over its lifetime.

It is therefore an object of the present invention to provide a positioning unit for optical fibre cables which is suitable for cable units having a small diameter. It is another object of the present invention to provide a positioning unit for optical fibre cables which provides effective strain relief. It is a further object of the present invention to provide a positioning unit for optical fibre cables which is both flexible and economical.

Accordingly, the present invention provides a positioning unit according to the following claim 1.

By providing at least one pair of walls between which cable-holding members may be accommodated, a large degree of flexibility is obtained as cable-holding members may be added or taken away.

By providing a protrusion on each cable-holding member which can lock into an adjacent cable-holding member, a vastly improved structural rigidity is obtained in an extremely simple manner. This structural rigidity is particularly useful for transferring axial pull forces from the strength member and the associated cable-holding member onto the adjacent cable-holding members and the base member. As the structure is simple, it is very suitable for miniaturisation.

In one aspect (A) of the present invention, the walls of the base member are provided with ribs protruding into the space for accepting cable-holding members, and these ribs are used to engage the cable-holding members and to transfer any axial pull forces from the cable-holding members to the ribs. The use of engaging ribs in addition to interlocking protrusions provides an enhanced structural rigidity. In addition, the ribs may assist in positioning the cable-holding members between the walls.

A plurality of such cable holding member stacks may be located on a single base plate, thus providing the possibility to terminate a relatively large number of optical fibre cables.

Preferably the said protrusion extends away from the base member, and, according to a second aspect (B) of the present invention, the base member has a protrusion which can be accepted in a recess of a cable-holding member. Alternatively the base member may be provided with a recess for accepting the interlocking protrusion of the cable-holding member closest to the base plate, when the protrusions face towards the base member.

Optical fibre cables which are to be terminated and/or broken out into constituent cable elements usually have a cable sheath from which a certain length is removed to facilitate the termination, exposing the constituent cable elements and any strength member. As a consequence, the end part of the cable has a smaller diameter than the rest of the cable. In order to be able to suitably accommodate such a cable end it is preferred that the groove for accepting an optical fibre cable has a wider part near the rear face and a narrower part near the front face of the cable-holding member. The actual width of the groove will of course depend on the particular type of cable to be terminated. In the preferred embodiment, however, the wider part of the groove has a width of less than 4 mm, said width preferably being approximately 2 mm.

To better contain any terminated cable, it is preferred that the cable-holding member is provided with a hinging cover for covering at least part of said groove. To facilitate the application of the cable-holding member and to minimise the number of parts it is preferred that the cover is integral with the cable-holding member. In a preferred embodiment the cover when closed, covers only the wider part of the groove. This allows the cable to be contained by enclosing only the part having a relatively large diameter, leaving the smaller diameter end free for any handling and/or manipulation.

To terminate a large number of optical fibre cables it is advantageous when the pairs of upstanding walls are arranged in at least two staggered rows. The staggered arrangement allows cables terminated in the front row of cable-holding members to pass between the cable-holding members of a back row. Each array (preferably stack) of cable-holding members may comprise 2, 3, 4, 5 or even more cable-holding members, although arrays of 3 cable-holding members are preferred.

To guide the optical fibre cables to the cable-holding members the base member may be provided with additional upstanding walls which are curved and have a bend radius which is equal to or greater than the minimum bend radius of the optical fibre cables.

The present invention further provides a kit-of-parts for providing a positioning unit as defined above, and an organizer for optical fibres provided with such a positioning unit. The base member of the positioning unit may advantageously be integrated in a base member of the organizer.

The present invention will be further explained with reference to an exemplary embodiment illustrated in the accompanying drawing, in which:
Figure 1 schematically shows, in perspective, a positioning unit according to the present invention;
Figure 2 schematically shows, in perspective, the positioning unit of Fig.1a as seen from the back; and
Figures 3a and 3b schematically show, in perspective, a cable-holding member for use in the positioning unit of Figure 1.

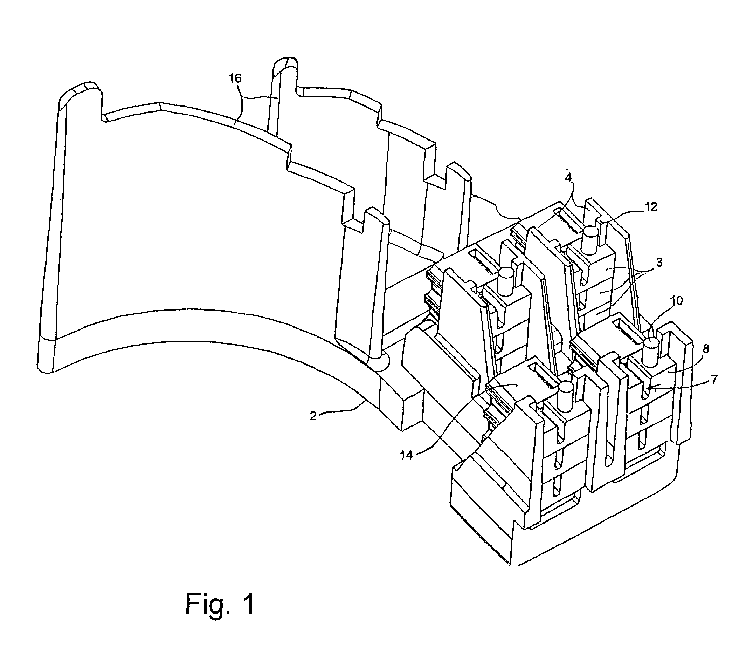

The positioning unit 1 shown in Fig. 1 merely by way of non-limiting example has a base member 2 on which a plurality of cable-holding members 3 is accommodated. The base member 2 shown in Fig.1 has four pairs of upstanding walls 4. Each pair of walls 4 defines a space in which a number of (in the example shown : three) cable-holding members 3 are accommodated. A rib 12 protrudes from each wall 4 into the said space to engage the cable-holding members.

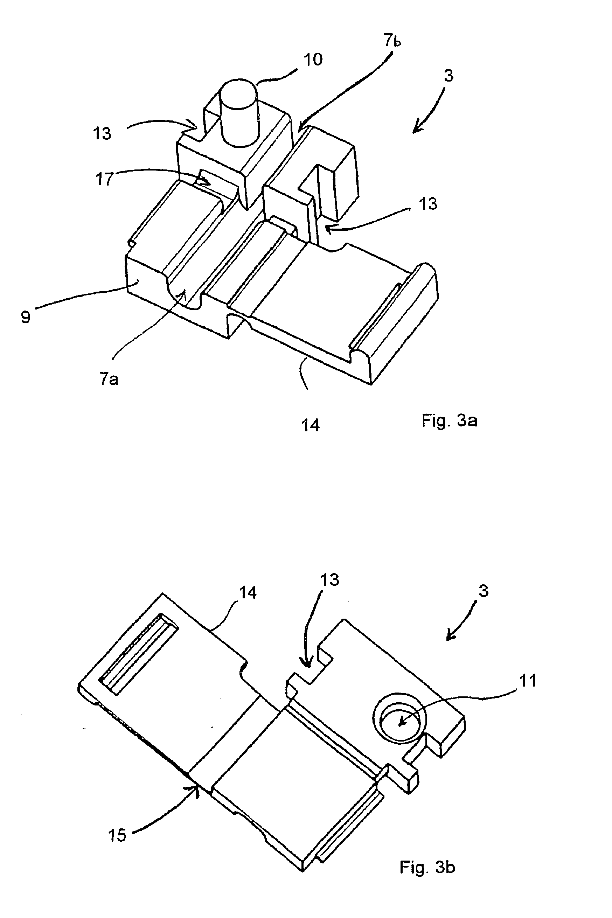

Each cable-holding member 3 has a groove 7 which extends in its longitudinal direction, from a front face 8 to a rear face 9 (see Fig.3a). A hinging cover 14 covers part of the groove 7 to contain an optical fibre cable (not shown) accommodated therein.

According to an important aspect of the present invention, each cable-holding member 3 has a protrusion 10 which serves to interlock with another cable-holding member. As shown in Fig.1, the protrusions or locking pins 10 extend in the same direction as the walls 4, away from the base member 2, transversely of the direction of the groove 7. This arrangement ensures that any pulling forces exerted on the strength member of an optical fibre cable accommodated in a groove 7 will be at least partially absorbed by any adjacent cable-holding members of the same stack. As a result, any strain is distributed over the cable-holding of the stack. In addition, the interlocking protrusions 10 maintain the orientation of the cable-holding members.

Optical fibre cables (not shown) are guided in their paths towards the cable-holding members 3 by guide walls 16 which maintain a minimum bend radius. In the embodiment shown, the guide walls 16 and the walls 4 are integral parts of the base member 2.

In the embodiment shown, four stacks of cable-holding members 3 are accommodated in the base member 2, in two rows. The stacks of the back row are not positioned immediately behind those of the front row but are shifted over about half their widths. This staggered arrangement allows optical fibre cables terminated in the back row to pass between the stacks of the front row.

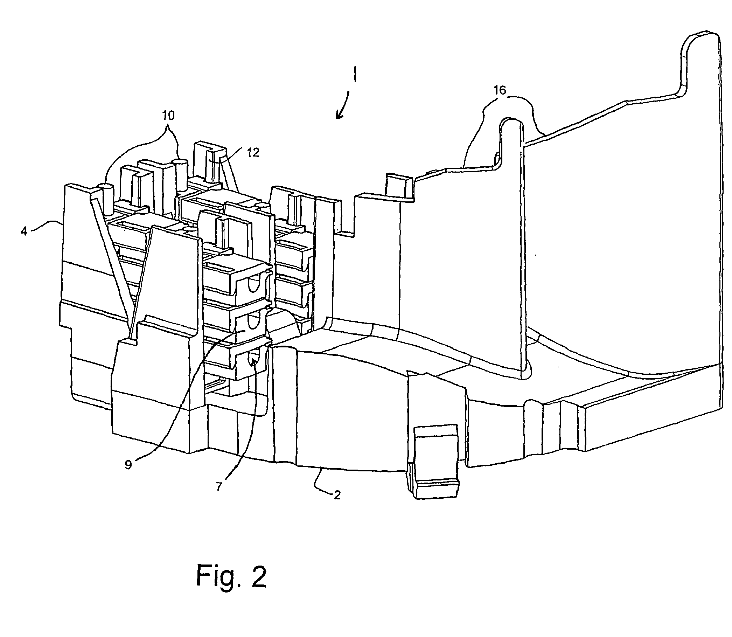

The view of Fig. 2 clearly shows the guide walls 16 for guiding any optical fibre cables (not shown) towards the grooves 7 in the rear faces 9 of the cable-holding members 3.

The cable-holding member 3 of Fig. 3a is shown to have a longitudinally extending groove 7 for accommodating an optical fibre cable (for example a so-called "pigtail"). The groove 7 has a wider part 7a in which the sheathed part of the cable can be fitted and a narrower part 7b for accommodating that part of the cable from which the sheath has been removed. The groove parts 7a and 7b are separated by a transverse groove 17 in which the strength member of the cable can be accommodated. Preferably, the strength member emerging from the sheath in the wider groove part 7a is wound, through the transverse groove 17 (for example from left to right in Fig 3a), one or more times around the cable-holding member and then passed longitudinally through the narrower groove part 7b or over the (closed) cover 14.

Figures 3a and 3b clearly show the notches 13 which serve to accommodate the ribs 12 shown in Fig. 1 and thereby to engage the walls 4. These notches 13, which allow the cable-holding members to slide up or down between the walls 4 while maintaining their engagement, transfer any pulling forces to the walls 4. In addition, the protrusions 10 transfer any pulling forces to other cable-holding members. To this end, the cable-holding members are provided with a recess 11 for accommodating the protrusion of another cable-holding member, as shown in Fig. 3b.

The cover 14 is shown to be integral with the cable-holding member 3, connected by so-called "living hinge" 15. It is, of course, possible for the cover 14 to be hinged by a releasable hinge, or not to be hinged at all.

## Claims

1. Positioning unit (1) for positioning optical fibre cables, the unit comprising a base member (2) and at least two cable-holding member (3), the base member (2) having at least one pair of upstanding walls (4) defining a space for accepting two or more stacked cable-holding members (3) each respectively holding a different cables, each cable-holding member (3) having a groove (7) extending between a front face (8) and a rear face (9) of the cable holding member for receiving an optical fibre cable, **characterised in that** each of the said cable-holding members (3) has a protrusion (10) on one side extending substantially transversely of the groove (7) and a recess (11) on an opposite side for receiving a corresponding protrusion (10) of another, adjacent cable-holding member, to form a stack of interlocked cable-holding members, wherein
(A) the walls (4) of the base member (2) are provided with ribs (12) protruding into the space for accepting cable-holding members, and the cable-holding members (3) have notches (13) for accommodating the ribs (12); and/or
(B) the base member (2) has a protrusion (10) which can be accepted in a recess (11) of a cable-holding member (3), or the base member (2) has a recess which can accept a protrusion (10) of a cable-holding member.

2. Positioning unit according to claim 1, wherein the cable-holding member (3) is provided with a hinged cover (14) for covering at least part of said groove (7).

3. Positioning unit according to claim 2, wherein the cover (14) is integral with the cable-holding member (3).

4. Positioning unit according to claim 2 or 3, wherein the groove (7) has a wider (7a) and a narrower part (7b) and the cover (14), when closed, covers only the wider part (7a) of the groove (7).

5. Kit-of-parts for providing a positioning unit (1) according to any of the preceding claims.

6. Organizer for optical fibres, provided with at least one positioning unit (1) according to any of claims 1-4.

7. Organizer according to claim 6, wherein the base member (2) of the termination unit (1) is integrated in a base member of the organizer.

## Patentansprüche

1. Positionieranlage (1) für das Positionieren von Lichtwellenleiterkabeln, wobei die Anlage ein Basiselement (2) und mindestens zwei Kabelhalteelemente (3) aufweist, wobei das Basiselement (2) mindestens ein Paar aufrechtstehende Wände (4) aufweist, die einen Raum für das Aufnehmen von zwei oder mehr gestapelten Kabelhalteelementen (3) definieren, die jeweils ein unterschiedliches Kabel halten, wobei jedes Kabelhalteelement (3) eine Nut (7) aufweist, die sich zwischen einer vorderen Fläche (8) und einer hinteren Fläche (9) des Kabelhalteelementes für das Aufnehmen eines Lichtwellenleiterkabels erstreckt, **dadurch gekennzeichnet, dass** ein jedes der Kabelhalteelemente (3) einen Vorsprung (10) auf einer Seite, der sich im Wesentlichen quer von der Nut (7) erstreckt, und eine Aussparung (11) auf einer entgegengesetzten Seite für das Aufnehmen eines entsprechenden Vorsprunges (10) eines anderen benachbarten Kabelhalteelementes aufweist, um einen Stapel von verriegelten Kabelhalteelementen zu bilden, wobei
(A) die Wände (4) des Basiselementes (2) mit Rippen (12) versehen sind, die in den Raum für das Aufnehmen der Kabelhalteelemente vorstehen, und wobei die Kabelhalteelemente (3) Kerben (13) für das Aufnehmen der Rippen (12) aufweisen; und/oder
(B) das Basiselement (2) einen Vorsprung (10) aufweist, der in einer Aussparung (11) eines Kabelhalteelementes (3) aufgenommen werden kann, oder das Basiselement (2) eine Aussparung aufweist, die einen Vorsprung (10) eines Kabelhalteelementes aufnehmen kann.

2. Positionieranlage nach Anspruch 1, bei der das Kabelhalteelement (3) mit einer gelenkigen Abdeckkappe (14) für das Bedecken von mindestens einem Teil der Nut (7) versehen ist.

3. Positionieranlage nach Anspruch 2, bei der die Abdeckkappe (14) mit dem Kabelhalteelement (3) zusammenhängend ist.

4. Positionieranlage nach Anspruch 2 oder 3, bei der die Nut (7) einen breiteren (7a) und einen schmaleren Abschnitt (7b) aufweist und die Abdeckkappe (14), wenn sie geschlossen ist, nur den breiteren Abschnitt (7a) der Nut (7) bedeckt.

5. Bausatz von Teilen für das Bereitstellen einer Positionieranlage (1) nach einem der vorhergehenden Ansprüche.

6. Ordnungseinrichtung für optische Fasern, die mit mindestens einer Positionieranlage (1) nach einem der Ansprüche 1 bis 4 versehen ist.

7. Ordnungseinrichtung nach Anspruch 6, bei der das Basiselement (2) der Abschlusseinheit (1) in einem Basiselement der Ordnungseinrichtung integriert ist.

## Revendications

1. Unité de positionnement (1) pour positionner des câbles à fibres optiques, l'unité comprenant un élément de base (2) et au moins deux éléments de retenue de câbles (3), l'élément de base comportant au moins une paire de parois verticales (4) définissant un espace pour recevoir deux ou plusieurs éléments de retenue des câbles empilés (3), retenant chacun respectivement un câble différent, chaque élément de retenue des câbles (3) comportant une rainure (7) s'étendant entre une face avant (8) et une face arrière (9) de l'élément de retenue des câbles, pour recevoir un câble à fibres optiques, **caractérisée en ce que** chacun desdits éléments de retenue des câbles (3) comporte une saillie (10) sur un côté, s'étendant de manière pratiquement transversale par rapport à la rainure (7), et un évidement (11) sur un côté opposé, recevant une saillie correspondante (10) d'un autre élément de retenue des câbles adjacent, pour former une pile d'éléments de retenue des câbles à verrouillage mutuel,
(A) les parois (4) de l'élément de base (2) comportant des nervures (12) débordant dans l'espace pour recevoir les éléments de retenue des câbles, les éléments de retenue des câbles (3) comportant des encoches (13) pour recevoir les nervures (12) ; et/ou
(B) l'élément de base (2) comportant une saillie (10) pouvant être reçue dans un évidement (11) d'un élément de retenue des câbles (3), l'élément de base (2) pouvant aussi comporter un évidement pouvant recevoir une saillie (10) pour un élément de retenue des câbles.

2. Unité de positionnement selon la revendication 1, dans laquelle l'élément de retenue des câbles (3) comporte un couvercle articulé (14) destiné à recouvrir au moins une partie de ladite rainure (7).

3. Unité de positionnement selon la revendication 2, dans laquelle le couvercle (14) fait partie intégrante de l'élément de retenue des câbles (3).

4. Unité de positionnement selon les revendications 2 ou 3, dans laquelle la rainure (7) comporte une partie plus large (7a) et une partie plus étroite (7b), le couvercle (14) ne recouvrant à l'état fermé que la partie plus large (7a) de la rainure (7).

5. Kit de pièces pour fournir une unité de positionnement (1) selon l'une quelconque des revendications précédentes.

6. Organiseur pour fibres optiques, comportant au moins une unité de positionnement (1) selon l'une quelconque des revendications 1 à 4.

7. Organiseur selon la revendication 6, dans laquelle l'élément de base (2) de l'unité de raccordement (1) est intégré dans un élément de base de l'organiseur.
